# EUROPEAN PATENT APPLICATION

(11) **EP 3 111 979 A1**
(43) Date of publication of application: **04.01.2017**
(21) Application number: 16176712.4
(22) Date of filing: 28.06.2016
(51) Int. Cl.: A61M 16/00, C01B 13/02, F25J 1/00

(54) **APPARATUS FOR STORING AND PRODUCING OXYGEN, PARTICULARLY IN THE HOSPITAL FIELD**

(30) Priority: 29.06.2015 IT UB20151768
(71) Applicant: SOL S.p.A., 20900 Monza (IT)
(72) Inventor: LECOINTRE, Matthieu, 20900 Monza (IT); CLEMENT, Patrick, 20900 Monza (IT)
(74) Representative: Modiano, Micaela Nadia

(57) **Abstract**

An apparatus (10) for storing and producing oxygen, particularly in the hospital field, comprising at least one source (15, 20) of gaseous oxygen (40) that derives from the vaporization of liquid oxygen, at least one source (25) of gaseous oxygen (43) that derives from the fractionation of air, at least one source (30, 35) of medical air (46), and a system of ducts (50) adapted to connect the apparatus (10) to a medical oxygen distribution network (80); and mixing means (55) adapted to mix:
- the gaseous oxygen (40) that derives from the vaporization of liquid oxygen;
- the gaseous oxygen (43) that derives from the fractionation of air; and
- the medical air (46);
the sources (15, 20, 25, 30, 35) being connected to the mixing means (55) through the system of ducts (50).

## Description

The present invention relates to an apparatus for storing and producing oxygen, particularly but not exclusively useful and practical within hospital facilities or, more generally, within health care facilities, in which medical oxygen is used extensively in various fields of medicine, such as intensive care, surgery, emergency medicine, etc.

The administration of oxygen with high purity or high concentration, commonly known as medical oxygen, is indicated for example for use in resuscitation treatments, in major trauma, in anaphylaxis, in severe hemorrhages, in shock, in convulsive episodes and in hypothermia.

Oxygen and other compressed gases, furthermore, can be used in combination with an atomizer for the correct topical dispensing of drugs in the liquid state that are intended to be deposited and to act on the upper and/or lower airways.

So-called "medical air", i.e., dry and purified air constituted by a set of different gases, including oxygen, also is normally used to atomize volumes of liquid in a continuous manner.

Various types of system for storing oxygen are currently known, such as tanks containing cryogenic liquid oxygen or cylinders containing compressed gaseous oxygen, which allow to store and supply in output medical oxygen with a purity of over 99%.

In the first known type of oxygen storage system, cryogenic liquid oxygen is stored in adapted cryogenic tanks, i.e., tanks that ensure thermal insulation between their content and the outside environment by interposing vacuum areas, which keep the liquid oxygen at a temperature below the boiling point until the moment when it is needed; at that point the liquid oxygen is made to vaporize in order to be able to release the oxygen in gaseous form.

The oxygen in the form of cryogenic liquid is supplied to the hospital by external third parties, which deliver it to the hospital by means of trucks and/or trailers provided with tanks equipped appropriately for road transport of cryogenic liquid and for the transfer of said cryogenic liquid from said tanks to the cryogenic tanks.

In the second known type of oxygen storage system, instead, the gaseous oxygen is compressed, usually at a pressure of 130-300 bars, and is introduced in appropriately provided cylinders, which allow to store oxygen already in gaseous form, therefore without the need for liquid storage and for consequent vaporization, but generally with smaller volumes.

The cylinders containing oxygen in the form of gas are supplied to the hospital by external third parties, which deliver them to the hospital by means of trucks and/or trailers provided with loading compartments that are equipped specifically for road transport of cylinders.

Various types of system for producing oxygen are also currently known, such as oxygen concentrators, which allow to produce and supply in output medical oxygen with a purity comprised between 90% and 99%.

Oxygen concentrators produce gaseous oxygen, which is obtained by means of an air fractionation process, withholding the nitrogen that is present in the air.

These solutions of the known type for the storage and/or production of oxygen are not free from drawbacks, which include the fact that medical oxygen, in particular released by systems that include both cryogenic tanks and oxygen concentrators, has an excessive variability of its purity, caused by transition from cryogenic oxygen (99.5%) to oxygen produced by oxygen concentrators (93%) and vice versa.

This excessive variability of purity does not ensure correct administration of medical oxygen to patients and often requires an onerous activity for recalibration of ventilation devices or the like used in a hospital, such as for example the ones manufactured by the company Draeger Medical GmbH.

Another drawback of these solutions of the known type for storing and/or producing oxygen, and in particular of those that provide for the storage of cryogenic liquid oxygen, resides in that they have gas leaks caused by the natural vaporization of the cryogenic liquid oxygen stored in the cryogenic tanks.

A further drawback of these solutions of the known type for the storage and/or production of oxygen, and in particular those that provide for the storage of cryogenic liquid oxygen and/or compressed gaseous oxygen, resides in that their continuity of operation depends unavoidably on external supplies, i.e., on the liquid or gaseous oxygen supplied by third parties that are external to the hospitals.

They are in fact subject to inevitable interruptions in operation due to depletion of oxygen reserves when an extraordinary event occurs, such as for example natural calamities like earthquakes or floods, or when a general and extensive stoppage of logistical infrastructures occurs.

Moreover, another drawback of these solutions of the known type for storing and/or producing oxygen resides in that they they are subject to inevitable interruptions in operation in case of malfunction of the system, or in case of an electric power supply failure, which would compromise the operation of the system, in particular of oxygen concentrators.

The aim of the present invention is to overcome the limitations of the background art described above, providing an apparatus for storing and producing oxygen, particularly in the hospital field, that allows to obtain effects that are similar to or better than those obtainable with the solutions of the known type, allowing to distribute, within a hospital, medical oxygen with a purity the nominal value of which can be set between 92.5% and 97.5% with a deviation of less than 2.5% from the nominal value.

Within this aim, an object of the present invention is to provide an apparatus for storing and producing oxygen, particularly in the hospital field, that does not force medical personnel to recalibrate periodically the ventilation devices or the like used in a hospital.

Another object of the present invention is to devise an apparatus for storing and producing oxygen, particularly in the hospital field, that avoids the gas leaks caused by natural vaporization of the cryogenic liquid oxygen stored in cryogenic tanks.

A further object of the present invention is to provide an apparatus for storing and producing oxygen, particularly in the hospital field, that ensures the availability of medical oxygen and medical air to the hospital even if the external supplies of oxygen are interrupted, for example when an extraordinary event, such as natural calamities like earthquakes or floods, or a general and extensive stoppage of logistical infrastructures occurs.

Another object of the present invention is to devise an apparatus for storing and producing oxygen, particularly in the hospital field, that ensures the availability of medical oxygen and medical air to the hospital even in case of malfunction of part of the apparatus itself or in case of an interruption of the electric power supply.

Another object of the present invention is to provide an apparatus for storing and producing oxygen, particularly in the hospital field, in a hospital field, that is highly reliable, relatively simple to provide and economically convenient.

This aim, as well as these and other objects that will become better apparent hereinafter, are achieved by an apparatus for storing and producing oxygen, particularly in the hospital field, comprising at least one source of gaseous oxygen that derives from the vaporization of liquid oxygen, at least one source of gaseous oxygen that derives from the fractionation of air, at least one source of medical air, and a system of ducts adapted to connect said apparatus to a medical oxygen distribution network, characterized in that it comprises mixing means adapted to mix:
- said gaseous oxygen that derives from the vaporization of liquid oxygen;
- said gaseous oxygen that derives from the fractionation of air; and
- said medical air;
said sources being connected to said mixing means through said system of ducts.

Further characteristics and advantages of the invention will become better apparent from the description of a preferred but not exclusive embodiment of the apparatus for storing and producing oxygen, particularly in the hospital field, according to the invention, illustrated by way of non limiting example in the accompanying drawing, wherein:

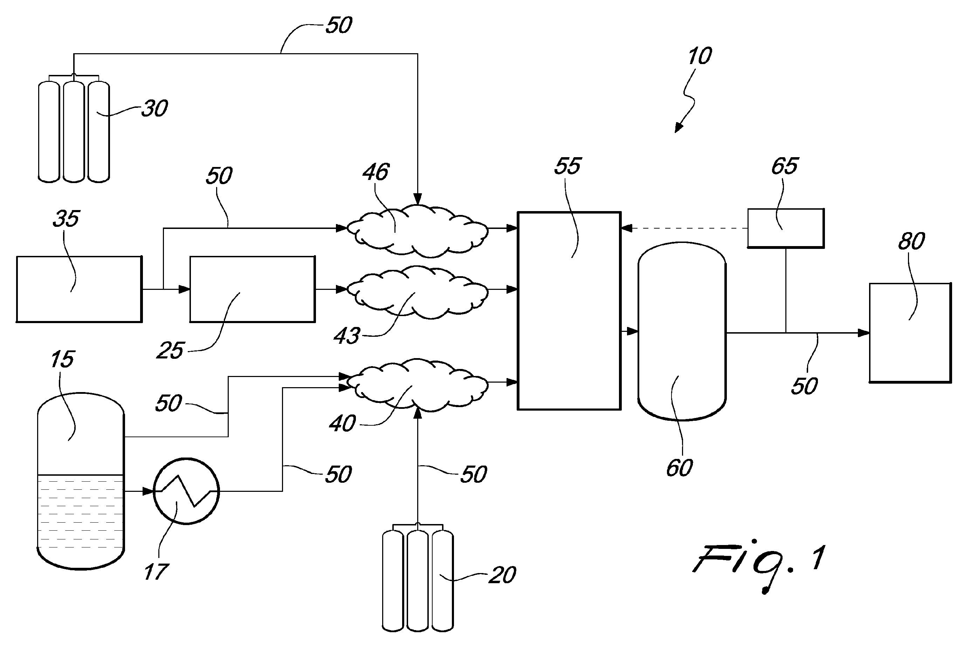

Figure 1 is a schematic view of the architecture of an embodiment of the apparatus for storing and producing oxygen, particularly in the hospital field, according to the present invention.

With reference to the figure, the apparatus for storing and producing oxygen, particularly in the hospital field, according to the invention, generally designated by the reference numeral 10, comprises storage units (or tanks) for oxygen in the form of cryogenic liquid 15, units for the production of oxygen (or concentrators) 25, units for the production of air (or generators) 35 adapted to supply the concentrators 25, according to the technical specifications thereof, and to meet the demand for medical air, after the associated treatments if necessary, optional storage units (or cylinders) for oxygen in the form of pressurized gas 20, an emergency medical air supply 30, mixing means 55 (for example enclosed in a mixing cabinet) associated with or connected to corresponding storage units (or tanks) for medical oxygen 60, and a system of ducts 50 for the mutual connection of the components of the apparatus 10 and for the connection of said apparatus 10 to the medical oxygen distribution network 80, which is external with respect to said apparatus 10.

The cryogenic tanks 15 of the apparatus 10 are tanks of the type with insulation in vacuum, i.e., tanks that ensure thermal insulation between their content and the outside environment by interposing areas of vacuum, and are adapted to store cryogenic liquid oxygen, so that inside them the temperature is kept constantly below the boiling point in order to keep the stored liquid oxygen in liquid form.

In practice, the cryogenic tanks 15 are arranged in isolated locations with respect to the rest of the apparatus 10, preferably in external environments, while the rest of the apparatus 10 is usually located in a dedicated room, so as to prevent external factors from causing more or less severe damage to the other elements that constitute said apparatus 10 and in order to ensure better control of the operating parameters, such as the ambient temperature.

The stored liquid oxygen can pass to the gaseous form by means of its natural vaporization, which occurs spontaneously inside the cryogenic tanks 15, or by means of a vaporization induced by heating, once it has been conveyed out of the cryogenic tanks 15.

In both cases, the gaseous oxygen 40, which derives from the natural or induced vaporization of cryogenic liquid oxygen, has a purity of 99.5% or more.

In the first case, the gaseous oxygen 40, which derives from natural vaporization, concentrates in the upper portion of the cryogenic tanks 15 and can circulate directly within the apparatus 10 through the system of ducts 50, supplying the mixing cabinet 55, whenever needed.

In the second case, instead, the liquid oxygen is conveyed out of the cryogenic tanks 15 and passes through an adopted vaporizer 17, which is associated with or connected to the cryogenic tanks 15, and only after transition from the liquid form to the gaseous form can the oxygen 40 circulate within the apparatus 10, always through the system of ducts 50, supplying the mixing cabinet 55.

In a preferred embodiment of the apparatus 10 for storing and producing oxygen, the vaporizer 17 is provided with aluminum fins that allow a high exchange of heat between the outside environment and the cryogenic liquid oxygen, inducing the vaporization of the latter.

The apparatus 10 for storing and producing oxygen also comprises air generators 35, constituted preferably by compressors, which are adapted to supply the concentrators 25 according to the technical specifications thereof and are adapted to produce medical air 46, after the associated treatments if needed, having an oxygen concentration comprised between 20% and 22%; in particular, the medical air 46 is obtained by compressing the air of the environment by means of the compressors and by sending said compressed air into filtration devices, which are adapted to reduce the humidity and the concentration of pollutants within the limits of the European Pharmacopeia (PhEur).

It should be noted that generally the management of the compressors is entrusted to an adapted automatic control system, which allows to operate them in an optimum manner.

The medical air 46 thus obtained is then stored under pressure for example in adapted tanks, which, by means of the system of ducts 50, supply the mixing cabinet 55 and the oxygen concentrators 25 of the apparatus 10 and an optional medical air distribution network of the hospital, which is not shown here.

It should be noted that the medical air 46 produced by the air generators 35, before being introduced in the optional medical air distribution network of the hospital, can undergo a further filtration and is then brought to the operating pressure of said medical air distribution network.

The concentrators 25 comprised in the apparatus 10 for storing and producing oxygen are adapted for the production of gaseous oxygen 43, having a purity comprised between 90% and 99%; in particular, the gaseous oxygen 43 is obtained by means of an air fractionation process, withholding the nitrogen that is present in the air, produced beforehand by the corresponding generators 35 and originating from the tanks associated with them.

These oxygen concentrators 25 are therefore supplied with air that is first compressed by the generators 35 and then subjected to the associated treatments according to the technical specifications of the generators.

Once the gaseous oxygen 43 has been produced by the concentrators 25, it is stored under pressure in the adapted tanks associated with the concentrators 25, and the tanks, by means of the system of ducts 50, supply the mixing cabinet 55.

The cylinders 20 optionally comprised in the apparatus 10 for storing and producing oxygen automatically supply the apparatus 10 with oxygen 40 in case of failure of the cryogenic tanks 15.

The emergency medical air supply 30 provides medical air 46 to the mixing cabinet 55 if the air generators 35 fail; for example, it can be constituted by containers (cylinders) of medical air in the form of pressurized gas.

As already mentioned, the apparatus 10 for storing and producing oxygen, according to the invention, is provided with mixing means 55, for example enclosed within a mixing cabinet; in particular, said mixing means 55, which are adapted to mix:
- the gaseous oxygen 40 produced by the natural or induced vaporization of cryogenic liquid oxygen, with a purity of 99.5% or more, originating from the cryogenic tanks 15 or from the pressurized gaseous oxygen cylinders 20;
- the gaseous oxygen 43, which originates from the air fractionation activity performed by the oxygen concentrators 25, which has a purity comprised between 90% and 99% and originates from the tanks associated with the oxygen concentrators 25;
- the medical air 46, produced by the air generators 35, after the associated treatments, which has an oxygen concentration comprised between 20% and 22% and originates from the tanks associated with the air generators 35 or from the emergency medical air supply 30.

In greater detail, the mixing cabinet 55 contains the devices required for the control and adjustment of the flow of the gases 40, 43 and 46, which originate from the various sources and constitute the medical oxygen by mixing. These devices for the control and adjustment of the flow of the gases 40, 43 and 46 can comprise for example pressure reduction units, valves, sensors, dial indicators, multistate LED indicators, etc.

The mixing of the gases 40, 43 and 46 occurs according to appropriate control parameters of the mixing cabinet 55 and said control parameters can be predefined and/or set automatically or by an operator.

By acting on the control parameters and by adjusting correctly the flow of the gases 40, 43 and 46, the mixing cabinet 55 is thus able to generate medical oxygen having a purity the nominal value of which can be set between 92.5% and 97.5% with a deviation of less than 2.5% from the nominal value.

The medical oxygen produced by the mixing cabinet 55 is first stored under pressure in the adapted tanks 60 and then dispensed, through the system of ducts 50, toward the medical oxygen distribution network 80 of the hospital.

In a preferred embodiment of the apparatus 10 for storing and producing oxygen according to the invention, an analysis device 65, adapted to measure the purity of the dispensed medical oxygen, is connected to the portion of the system of ducts 50 comprised between the medical oxygen tanks 60 and the medical oxygen distribution network 80 of the hospital.

This analysis device 65 measures the purity of the dispensed medical oxygen and sends to the mixing cabinet 55 a control signal with feedback, which allows to adjust automatically the mixing of the gases 40, 43 and 46 in order to produce and dispense to the medical oxygen distribution network 80 medical oxygen with the desired purity, with a deviation of less than 2.5% from the nominal value.

It should be noted that the medical oxygen produced by the mixing cabinet 55 and stored in the corresponding tanks 60, before being introduced in the medical oxygen distribution network 80 of the hospital, is brought to the operating pressure of said medical oxygen distribution network 80.

Finally, the apparatus 10 for storing and producing oxygen comprises the system of ducts 50, which is adapted to mutually connect the various components of the apparatus 10, including the cryogenic tanks 15, the oxygen concentrators 25, the air generators 35, the optional oxygen cylinders 20, the emergency medical air supply 30, and the mixing cabinet 55, and to connect the apparatus 10, in particular the medical oxygen tank 60 connected to the mixing cabinet 55, to the medical oxygen distribution network 80 of the hospital.

The system of ducts 50, furthermore, is adapted to supply the medical air produced by the apparatus 10 to the optional medical air distribution network of the hospital.

In a standard operational situation, the cryogenic tanks 15, in particular as regards the gaseous oxygen 40 that has vaporized spontaneously inside them, and the tanks of oxygen produced by the oxygen concentrators 25 can be used in a dynamic combination as oxygen sources for the production of medical oxygen by means of the mixing cabinet 55, in order to optimize the consumption of liquid oxygen.

In case of depletion of the liquid oxygen stored in the cryogenic tanks 15, the tanks of oxygen produced by the oxygen concentrators 25 become the main source of oxygen for the production of medical oxygen by means of the mixing cabinet 55.

Finally, in a critical operational situation in which the liquid oxygen stored in the cryogenic tanks 15 is depleted and the oxygen concentrators 25 and the air generators 35 are out of order, the oxygen cylinders 20, if provided, and the emergency medical air supply 30 become the sole source of oxygen and medical air for the production of medical oxygen by means of the mixing cabinet 55, performing their function of emergency source of oxygen 40 and of medical air 46.

In practice it has been found that the invention achieves fully the intended aim and objects. In particular, it has been shown that the apparatus for storing and producing oxygen, particularly in the hospital field, thus conceived allows to overcome the qualitative limitations of the background art, since it allows to distribute, within a hospital, medical oxygen with a purity the nominal value of which can be set between 92.5% and 97.5%, with a deviation of less than 2.5% from the nominal value, which does not force the medical personnel to perform additional recalibrations of the ventilation apparatuses or the like being used within the hospital, these recalibrations being necessary in case of a change in purity of the oxygen caused by the transition between sources of a different nature and with a different oxygen purity.

The apparatus for storing and producing oxygen according to the invention also allows to avoid the gas leaks produced by the natural vaporization of the cryogenic liquid oxygen stored in the cryogenic tanks.

Furthermore, the apparatus for storing and producing oxygen according to the invention ensures the availability of medical oxygen and medical air to the hospital even in case of interruption of the external supplies of oxygen, in case of malfunction of part of said apparatus, and in case of interruption of the electrical power supply, in particular by virtue of the redundancy of the oxygen sources comprised within the apparatus itself.

Although the apparatus for storing and producing oxygen according to the invention has been conceived in particular to be used within hospital facilities or, more generally, in healthcare facilities, it can in any case be used more generally for storing and producing oxygen within any facility requiring a continuous and constant availability of oxygen with high purity and/or dry and purified air to perform its functions, said facility being of the healthcare type, industrial type, etc.

The invention thus conceived is susceptible of numerous modifications and variations, all of which are within the scope of the accompanying claims. All the details may further be replaced with other technically equivalent elements.

In practice, the materials used, as well as the contingent shapes and dimensions, may be any according to the requirements and the state of the art.

Finally, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Application no. 102015000028386 (UB2015A001768), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for storing and producing oxygen, particularly in the hospital field, comprising at least one source (15, 20) of gaseous oxygen (40) that derives from the vaporization of liquid oxygen, at least one source (25) of gaseous oxygen (43) that derives from the fractionation of air, at least one source (30, 35) of medical air (46), and a system of ducts (50) adapted to connect said apparatus (10) to a medical oxygen distribution network (80), **characterized in that** it comprises mixing means (55) adapted to mix:
- said gaseous oxygen (40) that derives from the vaporization of liquid oxygen;
- said gaseous oxygen (43) that derives from the fractionation of air; and
- said medical air (46);
said sources (15, 20, 25, 30, 35) being connected to said mixing means (55) through said system of ducts (50).

2. The apparatus (10) for storing and producing oxygen according to claim 1, **characterized in that** the medical oxygen produced by said mixing means (55) has a nominal oxygen purity comprised between 92.5% and 97.5%, with a maximum variation of plus or minus 2.5%.

3. The apparatus (10) for storing and producing oxygen according to claim 1 or 2, **characterized in that** said at least one source (15, 20) of said gaseous oxygen (40) comprises at least one cryogenic tank (15) for the storage of liquid oxygen.

4. The apparatus (10) for storing and producing oxygen according to claim 3, **characterized in that** it comprises furthermore at least one vaporizer (17) associated with said at least one cryogenic tank (15), said at least one vaporizer (17) being adapted to induce the vaporization of said liquid oxygen in output from said cryogenic tank (15).

5. The apparatus (10) for storing and producing oxygen according to one or more of the preceding claims, **characterized in that** said at least one source (25) of said gaseous oxygen (43) comprises at least one concentrator (25) for the production of said gaseous oxygen (43).

6. The apparatus (10) for storing and producing oxygen according to one or more of the preceding claims, **characterized in that** said at least one source (30, 35) of said medical air (46) comprises at least one generator (35) for the production of said medical air (46).

7. The apparatus (10) for storing and producing oxygen according to one or more of the preceding claims, **characterized in that** said at least one source of said medical air (46) comprises at least one emergency supply (30) of said medical air (46).

8. The apparatus (10) for storing and producing oxygen according to one or more of the preceding claims, **characterized in that** it further comprises an analysis device (65) that is adapted to measure the purity of said medical oxygen produced by said mixing means (55) and to send a control signal with feedback to said mixing means (55).

9. The apparatus (10) for storing and producing oxygen according to one or more of the preceding claims, **characterized in that** it comprises at least one compressor, adapted to produce compressed air, and at least one filtration device, adapted to reduce the humidity and the concentration of the pollutants in said compressed air, thus converting said compressed air into said medical air (46).

10. The apparatus (10) for storing and producing oxygen according to one or more of the preceding claims, **characterized in that** said system of ducts (50) is further adapted to supply said medical air (46) to a medical air distribution network.
